# EUROPÄISCHE PATENTSCHRIFT

(11) **EP 3 788 422 B1**
(45) Veröffentlichungstag und Bekanntmachung des Hinweises auf die Patenterteilung: **06.04.2022**
(21) Anmeldenummer: 19719873.2
(22) Anmeldetag: 25.04.2019
(51) Int. Cl.: G02B 6/36

(54) **OPTISCHER DREHÜBERTRAGER**
OPTICAL ROTARY TRANSMITTER
TRANSMETTEUR OPTIQUE ROTATIF

(30) Priorität: 04.05.2018 DE 102018206894
(43) Veröffentlichungstag der Anmeldung: 10.03.2021
(73) Patentinhaber: Spinner GmbH, 83620 Feldkirchen-Westerham (DE)
(72) Erfinder: HUBER, Rupert, 83135 Schechen (DE); RINGEL, Reinhold, 83059 Kolbermoor (DE); HUBER, Thomas Hannes Timo, 83052 Bruckmühl (DE)
(74) Vertreter: Rösler, Uwe
(86) Internationale Anmeldenummer: PCT/EP2019/060619
(87) Internationale Veröffentlichungsnummer: WO 2019/211161

(56) Entgegenhaltungen:
- WO-A1-01/25666
- JP-A- S63 267 902
- US-A- 4 641 915
- US-A- 5 039 193

## Beschreibung

### Technisches Gebiet

Die Erfindung bezieht sich auf einen optischer Drehübertrager mit wenigstens zwei Gehäuseteilen, die um eine gemeinsame Drehachse relativ zueinander drehbar gelagert sind und mittel- und/oder unmittelbar einen Innenraum wenigstens bereichsweise fluiddicht umschließen, sowie wenigstens zwei Lichtwellenleiter, die jeweils durch ein Gehäuseteil fluiddicht ragen und im Innenraum mit einer Kollimatoroptik stirnseitig derart enden, so dass die Kollimatoroptiken an den Enden beider Lichtwellenleiter einen längs der Drehachse orientierten Zwischenspalt beidseitig begrenzen.

### Stand der Technik

Ein gattungsgemäßer optischer Drehübertrager ist bspw. in der Druckschrift US 4,641,915 offenbart, der zwei relativ zueinander drehbar gelagerte Gehäuseteile umfasst, in die jeweils ein stirnseitiges Ende eines Lichtwellenleiters mündet, längs der optische Signale übertragen werden. An den sich innerhalb der Gehäuseteile gegenüberliegenden Lichtwellenleiterenden ist jeweils eine Kollimatoroptik in Form einer Gradientenstablinse zum Zwecke einer möglichst verlustfreien optischen Signalübertragung angebracht. Es werden verschiedene Ausgestaltungsformen erläutert, bspw. optische Signalübertrager mit jeweils axial zur Drehachse angeordneten Lichtwellenleitern sowie axial und koaxial zur Drehachse angeordnete Lichtwellenleiter, zu deren Lichtübertragung optisch reflektierende Elemente vorzusehen sind. Auch ermöglichen jeweils als Kollimatoroptik ausgebildete Gradientenlinsen eine Anordnung der Lichtwellenleiter innerhalb eines optischen Drehübertragers mit jeweils schräg zur Drehachse orientierten Lichtwellenleiterlängserstreckungen und in jeweils diesen zugeordneten Kollimatoroptiken, wodurch störende, an den Grenzflächen auftretenden Rückreflexionseffekte durch gezielte Auskopplung vermieden werden können.

Der Einsatz optischer Drehübertrager ist in Anbetracht der rasant steigenden zu übertragenden Datenmenge in einer Vielzahl von unterschiedlichen Anwendungsbereichen nicht mehr wegzudenken und den bisher üblichen konventionellen, auf elektrischem Kontakt basierenden Drehübertragern weit überlegen.

Besondere Anforderungen an die Funktionstüchtigkeit gattungsgemäßer optischer Drehübertrager werden jeweils in Abhängigkeit der äußeren Umgebungseinflüsse, wie bspw. mechanische, thermische, chemische, atmosphärische oder sonstige Umgebungseinflüsse auf einen optischen Drehübertrager bestimmt.

Ein besonderes Anwendungsgebiet betrifft Unterwassereinsätze, insbesondere in großen Tiefen, in denen ein optischer Drehübertrager hohen Druckbelastungen unterliegt, die grundsätzlich je nach Einsatztiefe von 1 bar an Meereshöhe mit jeweils 1 bar/10m Wassertiefe bis zu maximal 1070 bar an der tiefsten Stelle, am Mariannengraben reichen kann.

Neben den jeweils absoluten Druckbelastungen in Abhängigkeit der jeweiligen Einsatztiefe eines optischen Drehübertragers können insbesondere zum Zwecke einer optischen Informationsübertragung zu mobilen Unterwasserobjekten, wie Tauchroboter etc., die optischen Drehübertrager innerhalb kürzester Zeit großen Druckschwankungen von mehreren 10 bar unterliegen. Derartige Einsatzbedingungen stellen neben den absoluten Dichtigkeitsanforderungen an die relativ zueinander drehbar gelagerten Gehäuseteile eines optischen Drehübertragers hohe Anforderungen an die mechanische Stabilität sämtlicher innerhalb des optischen Drehübertragers gelagerten optischen Komponenten.

Die Druckschrift WO 01/25666 A1 offenbart eine optische Drehkupplung für den Unterwasser- bzw. Tiefsee-Einsatz, die zum Zwecke eines Druckausgleiches eine druckausgleichende Sperrmembran vorsieht, die innerhalb einer Druckausgleichskammer angeordnet ist, um einen Druckausgleich zwischen der Öl-befüllten Innenkammer und dem Umgebungsdruck herzustellen. JP S63 267902 A offenbart ebenfalls eine optische Drehkupplung für den Unterwasser- bzw. Tiefsee-Einsatz. Weitere optische Drehkupplungen mit einem Fluid-befüllten Innenraum sind den Druckschriften US 2007/0217736 A1, US 5,039,193 B1 sowie US 2005/0036735 A1 zu entnehmen. Zum Druckausgleich dienen in diesen Fällen jeweils linearbeweglich angeordnete Dichtelemente.

### Darstellung der Erfindung

Der Erfindung liegt die Aufgabe zugrunde einen optischen Drehübertrager mit wenigstens zwei Gehäuseteilen, die um eine gemeinsame Drehachse relativ zueinander drehbar gelagert sind und mittel-/unmittelbar einen Innenraum wenigstens bereichsweise fluiddicht umschließen, sowie wenigstens zwei Lichtwellenleiter, die jeweils durch ein Gehäuseteil fluiddicht ragen und im Innenraum mit einer Kollimatoroptik stirnseitig derart enden, so dass die Kollimatoroptiken an den Enden beider Lichtwellenleiter einen längs der Drehachse orientierten Zwischenspalt beidseitig begrenzen, durch den die optische Lichtübertragung zwischen beiden Lichtwellenleitern erfolgt, derart weiterzubilden, so dass ein druckbeaufschlagter Unterwassereinsatz des optischen Drehübertragers zuverlässig und betriebssicher möglich wird. Insbesondere gilt es Vorkehrungen zu treffen, so dass eine optische Signalübertragung trotz der auf die Gehäuseteile einwirkenden, einsatzbedingten großen Druckunterschiede stabil und fehlerfrei erfolgen kann. Der für den Unterwassereinsatz konzipierte optische Drehübertrager soll Druckbelastungen von bis zu 1000 bar standhalten.

Die Lösung der der Erfindung zugrunde liegenden Aufgabe ist im Anspruch 1 angegeben. Merkmale, die den Erfindungsgedanken in vorteilhafter Weise weiterbilden, sind in den Unteransprüchen sowie der weiteren Beschreibung, insbesondere unter Bezugnahme auf das illustrierte Ausführungsbeispiel zu entnehmen.

Der lösungsgemäße optische Drehübertrager gemäß den Merkmalen des Oberbegriffes des Anspruches 1 zeichnet sich dadurch aus, dass der Innenraum gemeinsam mit den wenigstens zwei Gehäuseteilen von einer schlauchförmigen Membran fluiddicht umfasst ist, die den Innenraum längs eines Abschnittes längs der Drehachse in Umfangsrichtung um die Drehachse vollständig umfasst, wobei die schlauchförmige Membran mit ihrer dem Innenraum abgewandten Membranoberfläche zumindest abschnittsweise frei zugänglich angeordnet ist, d. h. in direktem freien Kontakt mit den, den optischen Drehübertrager umgebenden Medium, im Falle eines Unterwassereinsatzes, mit Wasser ungehindert und möglichst großflächig tritt. Auf diese Weise kann gewährleistet werden, dass die Umgebungsdruckbedingungen über die Membran auf den vorzugsweise mit einem Fluid gefüllten Innenraum verzögerungsfrei, d. h. unmittelbar übertragbar ist.

Dem optischen Drehübertrager liegt die Erkenntnis zugrunde, dass durch die Herstellung eines instantanen, d.h. verzögerungsfreien Druckausgleiches zwischen dem mit einem Fluid gefüllten Innenraum des optischen Drehübertragers und dem Umgebungsdruck die druckbedingten Belastungen auf den optischen Drehübertrager, insbesondere auf die zwischen beiden relativ zueinander drehbar gelagerten Gehäuseteilen vorgesehenen Dichtungen zur Gewährleistung eines fluiddichten Abschlusses, minimiert werden können. Auf diese Weise werden druckbedingte Verformungskräfte innerhalb beider Gehäuseteile, in denen die optischen Lichtwellenleiter mit den endseitig an diesen angebrachten Kollimatoroptiken angeordnet sind, auf ein Minimum vorzugsweise vollständig reduziert, so dass die optische Signalübertragung keinerlei Beeinträchtigung erfährt.

Der konstruktiven Ausgestaltung des lösungsgemäßen optischen Drehübertragers liegt die Maßgabe zugrunde, die wenigstens eine zum Zwecke eines Druckausgleiches vorgesehenen Membran möglichst großflächig auszubilden und fluiddicht mit wenigstens einem der beiden Gehäuseteile zu verbinden.

Um druckausgleichsbedingte, auf beide Gehäuseteile gerichtete Deformationskräfte zu vermeiden, ist die Membran einstückig schlauchartig ausgebildet und umfasst die Drehachse vollständig. Auf diese Weise ist die Membran dem Umgebungsdruck gleichmäßig symmetrisch um die Drehachse ausgesetzt, den sie gleichsam gleichverteilt um die Drehachse auf das Fluid im Innenraum des optischen Drehübertragers überträgt.

Vorzugsweise ist die Membran aus einem Elastomer in Form eines hohlzylinderförmig ausgebildeten Schlauchabschnittes gefertigt, der an einem der wenigstens zwei Gehäuseteile angeordnet ist. Zum Zwecke einer fluiddichten Verbindung zwischen der schlauchförmigen Membran und wenigstens einem der beiden Gehäuseteile sind jeweils die kreisrunden Schlauchabschnittsenden der Membran über eine kreis- oder kreisringförmig ausgebildete, presskraftbeaufschlagte Formschlussverbindung mit einem der beiden Gehäuseteile fluiddicht verbunden. Durch den vollständigen Ringschluss der jeweils presskraft-beaufschlagten Formschlussverbindung an beiden Schlauchabschnittsenden mit einem der beiden Gehäuseteile verteilen sich druckausgleichsbedingte, auf die Membran einwirkende Deformationskräfte gleichfalls gleichmäßig auf das unmittelbar an die Membran angrenzende Gehäuseteil, so dass keinerlei oder vernachlässigbar geringe mechanische Belastungen von der Membran auf das Gehäuseteil übertragen werden.

In einer Ausführungsform des optischen Drehübertragers weist die Membran einen maximalen radialen Abstand zur Drehachse auf, der kleiner ist als ein maximaler radialer Abstand der wenigstens zwei Gehäuseteile zur Drehachse. Zudem überragt dabei wenigstens ein Bereich eines Gehäuseteils wenigstens einen Teilbereich der Membran in axialer Membran-Erstreckung radial außerhalb zur Membran. Auf diese Weise ist ein mechanischer Schutz der Membran vor äußeren mechanischen Einflüssen sichergestellt.

Alternativ zur Ausbildung der aus einem Elastomermaterial gefertigten Membran, die ein zum Gehäuseteil separates Bauteil darstellt, bietet es sich an, die Membran einstückig mit dem Gehäuseteil auszubilden, d.h. aus dem gleichen Material wie das Gehäuseteil bspw. aus Metall. In diesem Fall verfügt die Membran zum Zwecke einer elastischen Verformbarkeit über eine ausreichend dünne Wandstärke. Ferner dient als Übergang zwischen Membran und Gehäuseteil eine Art Festkörpergelenk, vorzugsweise in Form eines Filmscharniers, um insbesondere eine radiale Membranbeweglichkeit relativ zum Gehäuseteil zu gewährleisten.

Die Ausbildung der Membran in Form einer einstückig mit einem der beiden Gehäuseteile verbundenen Komponente lässt sich in besonders vorteilhafter Weise im Rahmen eines generativen Herstellungsprozesses realisieren. Je nach Materialwahl zur Ausbildung des Gehäuseteils, vorzugsweise beider Gehäuseteile, bieten sich unterschiedliche generative Herstellungsprozesse an. Im Falle der Ausbildung der Gehäuseteile aus einem metallischen Werkstoff eignen sich Lasersinterverfahren, im Falle der Ausbildung beider Gehäuseteile aus einem Kunststoffmaterial können schichtweise generative Herstellungsverfahren nach Art des Fused Deposition Modelling, kurz FDM, eingesetzt werden.

Der zum Zwecke der Druckaufnahme mit einem Fluid gefüllte Innenraum des optischen Drehübertragers ist vorzugsweise mit einem im optischen oder nahen infraroten Spektralbereich transparenten Fluid befüllt, bspw. mit einer wässrigen Lösung, Wasser, Öl, Hydraulikfluid oder Silikonöl. Besondere Anforderungen in Bezug auf den optischen Brechungsindex sind nicht erforderlich.

Um Lichtverluste bei der Lichtübertragung längs der Lichtwellenleiter zwischen den mit Fluid befüllten Zwischenspalt zu reduzieren, gilt es einerseits den Zwischenspalt minimal zu dimensionieren und die sich gegenüberliegenden Kollimatorstirnflächen zueinander nicht parallel zu lagern, d.h. die den Kollimatorstirnflächen zugeordneten Stirnflächennormalen schneiden sich unter einem Winkel α ≠ 0. In einer besonders geeigneten Ausgestaltung des Drehübertragers sind die Stirnflächennormalen der vorzugsweise als Gradientenlinsen ausgebildeten Kollimatoroptiken jeweils schräg zur Drehachse orientiert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b: Außenansicht zweier optischer Drehkupplungen und
- Fig. 2: Längsschnittdarstellung durch eine lösungsgemäß ausgebildete optische Drehkupplung.

### Wege zur Ausführung der Erfindung, gewerbliche Verwendbarkeit

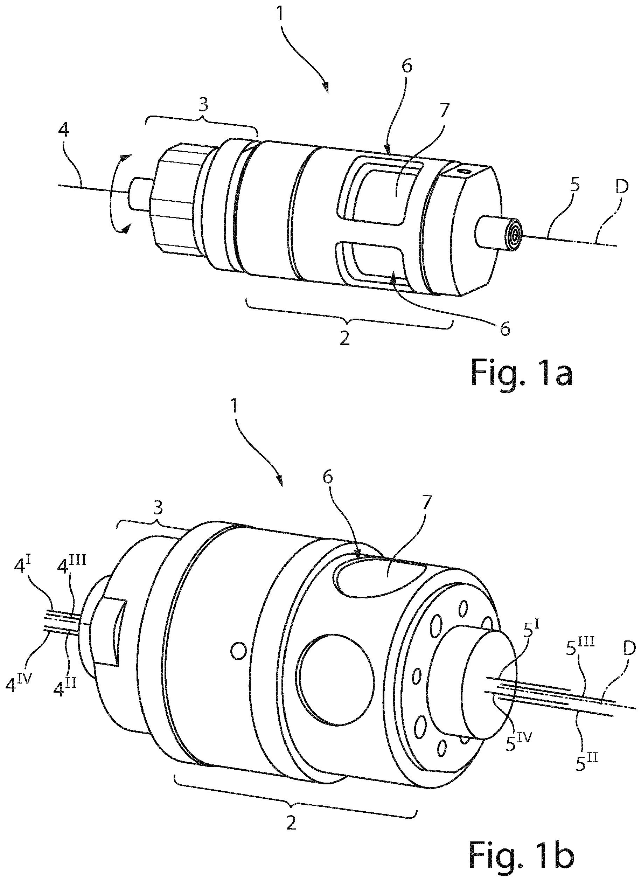

Figur 1a stellt eine perspektivische Außenansicht eines lösungsgemäß ausgebildeten optischen Drehübertragers 1 mit einem als Stator ausgebildeten Gehäuseteil 2 sowie einem als Rotor ausgebildeten Gehäuseteil 3, das relativ zu einer beide Gehäuseteile 2, 3 durchsetzenden Drehachse D rotierbar gelagert ist. In beiden Gehäuseteilen 2, 3 mündet jeweils ein Lichtwellenleiter 4, 5, längs der vermittels des optischen Drehübertragers 1 optische Signale übertragen werden.

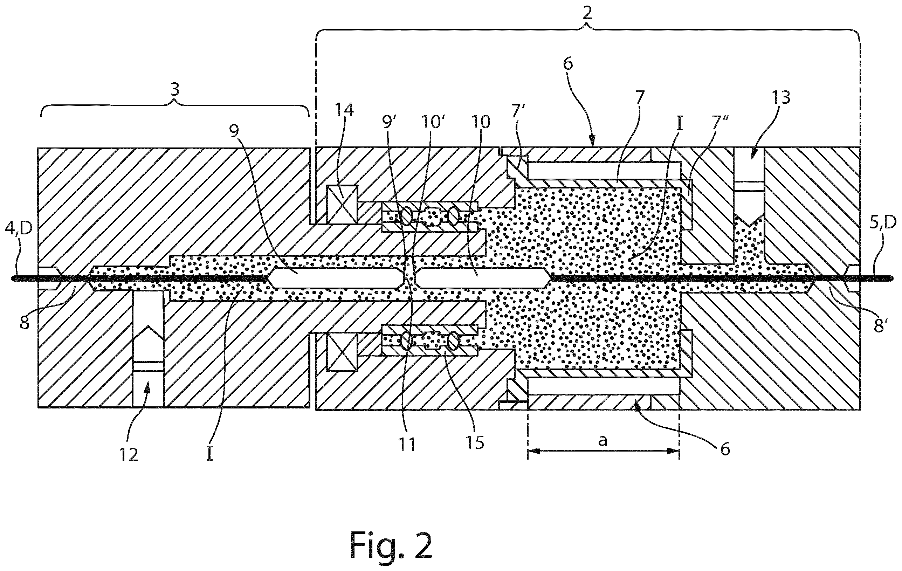

Das als Stator dienende Gehäuseteil 2 verfügt über fensterartige Ausnehmungen 6, zu denen radial innenliegend eine flexible Membran 7 angebracht ist, die die Drehachse D radial vollständig umgibt und in Art eines Schlauchabschnittes jeweils beidseitig axial fluiddicht mit dem Gehäuseteil 2, vorzugsweise in Form einer kraftbeaufschlagten Formschlussverbindung verbunden ist. Die Gehäuseteile 2 und 3 samt der mit dem Gehäuseteil 2 verbundenen Membran 7 schließen einen Innenraum I fluiddicht ab, siehe auch die Längsschnittdarstellung in Figur 2, innerhalb dem die Enden beider Lichtwellenleiter 4, 5 zu Zwecken der optischen Signalübertragung einander angrenzend gelagert sind.

Die in Form eines hohlzylinderförmig ausgebildeten Schlauchabschnittes ausgebildete flexible Membran 7 ist durch die große Öffnungsweite der fensterförmigen Ausnehmungen 6 ungehindert aus der unmittelbaren Umgebung des optischen Drehübertragers 1 zugänglich, so dass die Umgebungsdruckbedingungen an der gesamten äußeren Mantelfläche der flexibel ausgebildeten Membran 7 zu wirken vermögen. Diese konstruktive Eigenschaft ermöglicht einen Unterwassereinsatz des optischen Drehübertragers selbst in größten Tiefen sowie unter sich dynamisch verändernden Umgebungsdrucken, die sich bei mobilen Unterwasserobjekten, bspw. beim Einsatz von Unterwasserrobotern aufgrund variabler Tauchtiefen einstellen.

Figur 1b zeigt eine alternative Ausführungsvariante zur Realisierung eines optischen Drehübertragers 1, der für den submarinen Einsatz konzipiert ist und ein stationäres Gehäuseteil 2 sowie ein relativ dazu rotierendes Gehäuseteil 3 vorsieht. Auch im Falle der Figur 1b ist zu Zwecken eines Druckausgleiches am stationären Gehäuseteil 2 eine schlauchförmig ausgebildete, die Drehachse D in Umfangsrichtung vollständig umgebende Membran 7 mit dem Gehäuseteil 2 fluiddicht verbunden. Das stationär gelagerte Gehäuseteil 2 weist kreisrunde Fensteröffnungen 6 gleich verteilt in Umfangsrichtung um die Membran 7 auf, so dass die Membran 7 in Umfangsrichtung um die Drehachse D vollumfänglichen Zugang zur Umgebung hat, d. h. im Falle eines Unterwassereinsatzes gleichmäßig von Wasser umgeben ist. Im Unterschied zu dem in Figur 1 a illustrierten optischen Drehübertrager 1, der lediglich ein Paar Lichtwellenleiter 4, 5 miteinander koppelt, die längs der Drehachse D angeordnet sind, ermöglicht der in Figur 1b illustrierte optische Drehübertrager die optische Kopplung zwischen jeweils vier optischen Lichtwellenleiterpaaren, 5^{I}/4^{I}, 5^{II}/4^{II}, 5^{III}/4^{III} , 5^{IV}/4^{IV}.

In Figur 2 ist ein schematisierter Längsschnitt durch einen lösungsgemäß ausgebildeten optischen Drehübertrager 1 zur optischen Kopplung zweier drehbar relativ zueinander gelagerter Lichtwellenleiter 4, 5 gezeigt. Der Lichtwellenleiter 4 mündet durch eine fluiddichte Faserabdichtung 8 in das drehbar gelagerte Gehäuseteil 3 und weist an seinem stirnseitigen Ende eine Kollimatoroptik 9 auf, die mit dem Wellenleiter 4 fest und druckstabil, bspw. im Wege einer Schweißverbindung, verbunden ist.

In der gleichen Weise mündet der Lichtwellenleiter 5 über eine fluiddichte Faserabdichtung 8' in das Innere des stationär gelagerten Gehäuseteils 2, an dessen Ende gleichfalls eine Kollimatoroptik 10 druckstabil fest gefügt ist. Beide Kollimatoroptiken 9, 10 begrenzen mit ihren Kollimatorstirnflächen 9', 10' einen Zwischenspalt 11, der eine reibungsfreie bzw. reibungsarme Lagerung beider sich gegenüberstehenden und relativ zueinander drehbaren Kollimatorstirnflächen 9', 10' gewährleistet.

Beide Lichtwellenleiter 4, 5 samt deren Kollimatoroptiken ragen in einen Innenraum I, der von beiden Gehäuseteilen 2, 3 sowie einer mit dem stationär gelagerten Gehäuseteile 2 fluiddicht verbundenen elastisch verformbaren Membran 7 fluiddicht umgeben ist. Die elastische Membran 7 ist in Art eines Schlauchabschnittes aus elastomeren Material gefertigt und umfasst den Innenraum I längs eines axialen Abschnittes a um die Drehachse D vollständig. Somit ist gewährleistet, dass der Innenraum I fluiddicht gegenüber der Umgebung abgedichtet ist. Der Innenraum I ist zudem mit einem inkompressiblen Fluid, vorzugsweise Wasser, einer wässrigen Lösung, Öl, insbesondere Hydraulik- oder Silikonöl gefüllt, wobei das Fluid für Lichtwellenlängen vorzugsweise aus dem optischen oder infraroten Spektralbereich transparent gewählt ist, die dem über die Lichtwellenleiter 4, 5 zu übertragenden Licht entspricht.

Zur Befüllung des Innenraums I mit dem Fluid sind wenigstens zwei fluiddicht abschließbare Einfüllöffnungen 12, 13 in beiden Gehäuseteilen 2, 3 eingebracht. Zu Zwecken der fluidischen Abdichtung beider relativ zueinander drehbar gelagerter Gehäuseteile 2, 3 dient im gezeigten Ausführungsbeispiel eine unbewegliche Rotationsdichtung 14, bestehend aus einem abdichtenden O-Ring und einer Laufbahn an der Außenseiten einer Gehäusekomponente des rotierend gelagerten Gehäuseteils 3. Zudem sorgt ein Drehlager 15 für eine weitgehend verlustbefreite relative Drehbarkeit beider Gehäuseteile 2, 3.

Zur fluiddichten Abdichtung des Innenraums I im Bereich der Membran 7, die in Art eines aus elastomerem Material bestehenden Schlauchabschnittes geformt ist, dient jeweils an beiden sich axial gegenüberliegenden Enden der schlauchförmigen Membran 7 eine zwischen der Membran 7 und des stationären Gehäuseteils 2 ausgebildete kraftbeaufschlagte Formschlussverbindung, die sich jeweils kreis- bzw. ringförmig vollständig um die Drehachse erstreckt. Die Membran 7 ist aufgrund von Form- oder Materialwahl radial zur Drehachse D elastisch verformbar, so dass der in der Umgebung des optischen Drehübertragers vorherrschenden Umgebungsdruck ganzflächig an der zylinderförmigen äußeren Manteloberfläche der Membran 7 gleich verteilt lastet. Hierzu sind im stationären Gehäuseteil fensterartige Ausnehmungen 6, siehe auch Figur 1a, eingebracht. Zum Schutz der Membran gegen äußere mechanische Einflüsse ist die Membran 7 radial innenliegend gegenüber der radial äußeren Oberfläche des stationären Gehäuseteils 2 angeordnet.

Die Gehäuseteile 2, 3 sind aus mechanisch robustem und chemisch weitgehend inertem Material gefertigt, vorzugsweise aus Edelstahl, und bilden gegenüber mechanisch äußeren Einflüssen ein belastbares Bauelement. Alternativ zur Ausgestaltung der Membran 7 in Form eines aus elastomerem Material gefertigten Schlauchabschnittes ist es ebenso denkbar, die Membran 7 einstückig mit dem stationär gelagerten Gehäuseteil zu fertigen, d.h. aus dem gleichen Material wie das Gehäuseteil. Hierzu bieten sich generative Herstellungsverfahren an. Zur elastischen Lagerung einer derartig einstückig mit dem Gehäuseteil 2 gefertigten Membran 7 ist diese vorzugsweise über ein elastisches Festkörpergelenk mit dem Gehäuseteil verbunden.

Die übrigen in Figur 2 dargestellten Komponenten dienen einer möglichst reibungsarmen Lagerung beider drehbar relativ zueinander gelagerten Gehäuseteile 2, 3 und stehen nicht im Fokus des Erfindungsgedankens.

Um störende Rückreflexionsverluste bei der optischen Signalübertragung zwischen beiden Kollimatorstirnflächen zu verringern bzw. ganz zu vermeiden, sind die Kollimatoroptiken 9, 10 vorzugsweise derart relativ angeordnet, so dass ihre den jeweiligen Kollimatorstirnflächen zugeordneten Flächennormalen einen Winkel α ≠ 0° einschließen, d. h. nicht planparallel zueinander orientiert sind. Eine besonders vorteilhafte Anordnung zumindest beider Kollimatoroptiken stellt eine Anordnung dar, bei der die Flächennormalen beider Kollimatorstirnflächen jeweils schräg zur Drehachse D orientiert sind.

### Bezugszeichenliste

- 1: optischer Drehübertrager
- 2: stationär gelagertes Gehäuseteil
- 3: drehbar gelagertes Gehäuseteil
- 4, 5: Lichtwellenleiter
- 4^{I}, 4^{II}, 4^{III}, 4^{IV}: Lichtwellenleiter
- 5^{I}, 5^{II}, 5^{III}, 5^{IV}: Lichtwellenleiter
- 6: fensterartige Ausnehmung
- 7: Membran
- 7', 7": Axiale Enden der Membran
- 8, 8': fluiddichte Faserabdichtung
- 9, 10: Kollimatoroptik
- 9', 10': Kollimatorstirnfläche
- 11: Zwischenspalt
- 12, 13: Befüllungsmechanismus
- 14: Rotationsdichtung
- 15: Drehlager
- D: Drehachse
- a: axialer Abschnitt
- I: Innenraum

## Patentansprüche

1. Optischer Drehübertrager (1) mit wenigstens zwei Gehäuseteilen (2, 3), die um eine gemeinsame Drehachse (D) relativ zueinander drehbar gelagert sind und mittel- oder unmittelbar einen Innenraum (I) wenigstens bereichsweise fluiddicht umschließen, sowie wenigstens zwei Lichtwellenleiter (4, 5), die jeweils durch eines der Gehäuseteile (2, 3) fluiddicht ragen und im Innenraum (I) mit einer Kollimatoroptik (9, 10) stirnseitig derart enden, so dass die Kollimatoroptiken (9, 10) an den Enden beider Lichtwellenleiter (4, 5) einen längs der Drehachse (D) orientierten Zwischenspalt (11) beidseitig begrenzen,
**dadurch gekennzeichnet, dass** der Innenraum (I) einer schlauchförmigen Membran (7) fluiddicht umfasst ist und die Membran (7) fluiddicht mit wenigstens einem der wenigstens zwei Gehäuseteile (2, 3) verbunden ist,
dass die schlauchförmige Membran (7) den Innenraum (I) längs wenigstens eines Abschnittes (a) längs der Drehachse (D) in Umfangsrichtung um die Drehachse (D) vollständig umfasst, und
dass die schlauchförmige Membran (7) mit ihrer dem Innenraum (I) abgewandten Membranoberfläche zumindest abschnittsweise derart frei und ungehindert zugänglich angeordnet ist, dass an der dem Innenraum (I) abgewandten Membranoberfläche vorherrschende Umgebungsdruckbedingungen über die schlauchförmige Membran auf den Innenraum verzögerungsfrei übertragbar sind.

2. Optischer Drehübertrager nach Anspruch 1,
**dadurch gekennzeichnet, dass** der Innenraum (I) mit einem Fluid gefüllt ist, das transparent im optischen oder nahen infraroten Wellenlängenspektrum ist.

3. Optischer Drehübertrager nach Anspruch 2,
**dadurch gekennzeichnet, dass** das Fluid eines der nachfolgenden Fluide ist: wässrige Lösung, Wasser, Öl, Hydraulikfluid, Silikonöl.

4. Optischer Drehübertrager nach einem der Ansprüche 1 bis 3,
**dadurch gekennzeichnet, dass** die Membran (7) aus einem Elastomer gefertigt ausgebildet und mit einem der wenigstens zwei Gehäuseteile (2, 3) im Wege eines Presskraft-beaufschlagten Formschlusses eine den Innenraum (I) abdichtende Verbindung eingeht.

5. Optischer Drehübertrager nach einem der Ansprüche 1 bis 4,
**dadurch gekennzeichnet, dass** die Membran (7) einstückig über wenigstens ein Filmgelenk mit einem der wenigstens zwei Gehäuseteile (2, 3) verbunden ist.

6. Optischer Drehübertrager nach einem der Ansprüche 1 bis 5,
**dadurch gekennzeichnet, dass** die Membran (7) einen maximalen radialen Abstand zur Drehachse (D) aufweist, der kleiner ist als ein maximaler radialer Abstand der wenigstens zwei Gehäuseteile (2, 3) zur Drehachse (D), und
dass wenigstens ein Bereich eines der Gehäuseteile (2, 3) wenigstens einen Teilbereich der Membran (7) in axialer Membran-Erstreckung radial außerhalb zur Membran (7) überragt.

7. Optischer Drehübertrager nach einem der Ansprüche 1 bis 5,
**dadurch gekennzeichnet, dass** eines der Gehäuseteile (2), als Stator bezeichnet, relativ zum anderen Gehäuseteil (3), als Rotor bezeichnet, ruht,
dass der Rotor radial vom Stator zumindest abschnittsweise umgeben ist, und
dass die Membran (7) fluiddicht am Stator angebracht ist.

8. Optischer Drehübertrager nach einem der Ansprüche 1 bis 7,
**dadurch gekennzeichnet, dass** die mit den Lichtwellenleitern (4, 5) verbundenen Kollimatoroptiken (9, 10) jeweils eine den Zwischenspalt (11) einseitig begrenzende Kollimatorstirnfläche (9', 10') mit jeweils einer Stirnflächennormalen besitzen, und dass die Kollimatoroptiken (9, 10) derart angeordnet sind, dass sich deren zugeordnete Stirnflächennormalen unter einem Winkel α ungleich 0° schneiden.

9. Optischer Drehübertrager nach Anspruch 8,
**dadurch gekennzeichnet, dass** wenigstens eine der Kollimatoroptiken (9, 10) derart angeordnet ist, dass deren zugeordnete Stirnflächennormale schrägt zur Drehachse (D) orientiert ist.

10. Optischer Drehübertrager nach einem der Ansprüche 1 bis 9,
**dadurch gekennzeichnet, dass** wenigstens eine der Kollimatoroptiken (9, 10) in Form einer Gradienten-Linse ausgebildet ist.

11. Optischer Drehübertrager nach einem der Ansprüche 1 bis 10,
**dadurch gekennzeichnet, dass** die Kollimatoroptiken (9, 10) jeweils fest und druckstabil stirnseitig an den Lichtwellenleitern (4, 5) angebracht sind.

## Claims

1. An optical rotary transmitter (1) with at least two housing parts (2, 3), which are mounted about a common rotary axis (D) so as to be rotatable relative to each other and which directly or indirectly enclose an internal space (I) at least section-wise in a fluid-tight manner, as well as at least two optical waveguides (4, 5), each of which protrudes through one of the housing parts (2, 3) in the fluid-tight manner and at its end face ends with a collimator optics (9, 10) in the internal space (I) such that the collimator optics (9, 10) at the ends of both optical waveguides (4, 5) limit a gap (11) orientated along the rotary axis (D) on both sides,
**characterised in that** the internal space (I) is enclosed in a fluid-tight manner by a tubular membrane (7) and the membrane (7) is connected in the fluid-tight manner with at least one of the at least two housing parts (2, 3),
**in that** the tubular membrane (7) completely encloses the internal space (I) at least along a section (a) along the rotary axis (D) in circumferential direction around the rotary axis (D), and
**in that** the tubular membrane (7), with its membrane surface facing away from the internal space (I), is arranged, at least section-wise, in a freely accessible manner and without any obstructions such that environmental pressure conditions prevailing at the membrane surface facing away from the internal space (I) are transferable without delay into the internal space (I) via the tubular membrane.

2. The optical rotary transmitter according to claim 1, **characterised in that** the internal space (I) is filled with a fluid, which is transparent in the optical or near-infrared wavelength spectrum.

3. The optical rotary transmitter according to claim 2, **characterised in that** the fluid is one of the following fluids: aqueous solution, water, oil, hydraulic fluid, silicone oil.

4. The optical rotary transmitter according to one of claims 1 to 3, **characterised in that** the membrane (7) is constructed manufactured from an elastomer and forms a connection sealing the internal space (I) by way of a pressing-force-impacted form-fit with one of the at least two housing parts (2, 3).

5. The optical rotary transmitter according to one of claims 1 to 4, **characterised in that** the membrane (7) is connected in one piece via at least one film joint with one of the at least two housing parts (2, 3).

6. The optical rotary transmitter according to one of claims 1 to 5, **characterised in that** the membrane (7) has a maximum radial distance from the rotary axis (D), which is smaller than a maximum radial distance of the at least two housing parts (2, 3) from the rotary axis (D), and **in that** at least one area of one of the housing parts (2, 3) projects beyond at least a partial area of the membrane (7) in axial membrane extension radially external to the membrane (7).

7. The optical rotary transmitter according to one of claims 1 to 5, **characterised in that** one of the housing parts (2) denoted as stator is at rest relative to the other housing part (3) denoted as rotor, **in that** the rotor, at least section-wise, is surrounded radially by the stator, and **in that** the membrane (7) is attached to the stator in a fluid-tight manner.

8. The optical rotary transmitter according to one of claims 1 to 7, **characterised in that** the collimator optics (9, 10) connected to the optical waveguides (4, 5) each possess a collimator end face (9', 10') limiting the gap (11) on one side with an end face normal respectively, and **in that** the collimator optics (9, 10) are arranged such that the end face normals assigned thereto intersect each other at an angle α unequal to 0°.

9. The optical rotary transmitter according to claim 8, **characterised in that** at least one of the collimator optics (9, 10) is arranged such that the end face normal assigned thereto is orientated obliquely to the rotary axis (D).

10. The optical rotary transmitter according to one of claims 1 to 9, **characterised in that** at least one of the collimator optics (9, 10) is constructed in the shape of a gradient lens.

11. The optical rotary transmitter according to one of claims 1 to 10, **characterised in that** the collimator optics (9, 10) are each attached with their end faces to the optical waveguides (4, 5) in a firm and pressure-stable manner.

## Revendications

1. Transmetteur optique rotatif (1) avec au moins deux parties de boîtier (2, 3), qui sont logées pouvant tourner l'une par rapport à l'autre autour d'un axe de rotation commun (D) et entourent au moins en partie de façon étanche aux fluides , indirectement ou directement, un compartiment intérieur (I) ainsi qu'au moins deux fibres optiques (4, 5), qui dépassent respectivement de façon étanche aux fluides à travers une des parties de boîtier (2, 3) et se terminent frontalement dans le compartiment intérieur (I) avec un optique de collimation (9, 10) de telle manière que les optiques de collimation (9, 10) délimitent des deux côtés aux extrémités des deux fibres optiques (4, 5) un interstice intermédiaire (11) orienté le long de l'axe de rotation (D),
**caractérisé en ce que** le compartiment intérieur (I) est entouré de façon étanche aux fluides par une membrane tubulaire (7) et la membrane (7) est reliée de façon étanche aux fluides à au moins une des parties de boîtier (2, 3),
**en ce que** la membrane tubulaire (7) entoure complètement le compartiment intérieur (I) le long d'au moins une section (a) le long de l'axe de rotation (D) dans la direction périphérique autour de l'axe de rotation (D), et
**en ce que** la membrane tubulaire (7) est disposée librement et aisément accessible au moins en partie avec sa surface de membrane éloignée du compartiment intérieur (I) de telle sorte que sur la surface de membrane éloignée du compartiment intérieur (I), des conditions de pression ambiantes prédominantes peuvent être transmises sans retard par la membrane tubulaire au compartiment intérieur.

2. Transmetteur optique rotatif selon la revendication 1,
**caractérisé en ce que** le compartiment intérieur (I) est rempli d'un fluide, qui est transparent dans un spectre de longueurs d'ondes optique ou infrarouge proche.

3. Transmetteur optique rotatif selon la revendication 2,
**caractérisé en ce que** le fluide est un des fluides suivants : solution aqueuse, eau, huile, fluide hydraulique, huile de silicone.

4. Transmetteur optique rotatif selon l'une quelconque des revendications 1 à 3,
**caractérisé en ce que** la membrane (7) est constituée fabriquée à partir d'un élastomère et une liaison étanchéifiant le compartiment intérieur (I) est engendrée avec une au moins des deux parties de boîtier (2, 3) au cours d'un assemblage par conformité de forme sollicité par une force de compression.

5. Transmetteur optique rotatif selon l'une quelconque des revendications 1 à 4,
**caractérisé en ce que** la membrane (7) est reliée en une pièce par le biais d'au moins une charnière à film à une au moins des deux parties de boîtier (2, 3).

6. Transmetteur optique rotatif selon l'une quelconque des revendications 1 à 5,
**caractérisé en ce que** la membrane (7) comporte une distance radiale maximale par rapport à l'axe de rotation (D), qui est plus petite qu'une distance radiale maximale d'au moins les deux parties de boîtier (2, 3) par rapport à l'axe de rotation (D), et
**en ce qu'**au moins une zone d'une des deux parties de boîtier (2, 3) dépasse radialement en dehors de la membrane (7) au moins une partie de zone de la membrane (7) dans l'extension axiale de membrane.

7. Transmetteur optique rotatif selon l'une quelconque des revendications 1 à 5,
**caractérisé en ce qu'**une des parties de boîtier (2), désignée comme stator, est au repos par rapport à l'autre partie de boîtier (3), désignée comme rotor,
**en ce que** le rotor est entouré radialement au moins en partie par le stator et
**en ce que** la membrane (7) est montée de façon étanche aux fluides sur le stator.

8. Transmetteur optique rotatif selon l'une quelconque des revendications 1 à 7,
**caractérisé en ce que** les optiques de collimation (9, 10) reliés aux fibres optiques (4, 5) possèdent respectivement une surface frontale de collimation (9', 10') délimitant unilatéralement l'interstice intermédiaire (11) avec respectivement une normale à la surface frontale et
**en ce que** les optiques de collimation s (9, 10) sont disposés de telle manière que les normales à la surface frontale attribuées de ceux-ci se croisent sous un angle α différent de 0°.

9. Transmetteur optique rotatif selon la revendication 8,
**caractérisé en ce qu'**au moins un des optiques de collimation (9, 10) est disposé de telle manière que la normale à la surface frontale attribuée de celui-ci est orientée obliquement à l'axe de rotation (D).

10. Transmetteur optique rotatif selon l'une quelconque des revendications 1 à 9,
**caractérisé en ce qu'**au moins un des optiques de collimation (9, 10) est constitué sous la forme d'une lentille à gradient.

11. Transmetteur optique rotatif selon l'une quelconque des revendications 1 à 10,
**caractérisé en ce que** les optiques de collimation (9, 10) sont respectivement placés de manière frontale, fermement et de façon stable à la pression, sur les fibres optiques (4, 5).
